# FASCICULE DE BREVET EUROPEEN

(11) **EP 0 749 191 B1**
(45) Date de publication et mention de la délivrance du brevet: **10.10.2001**
(21) Numéro de dépôt: 96109245.9
(22) Date de dépôt: 10.06.1996
(51) Int. Cl.: H02J 7/00

(54) **Chargeur pour accumulateur d'énergie électrique**
Ladegerät für elektrischen Akkumulator
Charger for electrical accumulator

(30) Priorité: 16.06.1995 FR 9507234
(43) Date de publication de la demande: 18.12.1996
(73) Titulaire: The Swatch Group Management Services AG, 2501 Biel (CH)
(72) Inventeur: Vezzini, Andrea, 8004 Zürich (CH)
(74) Mandataire: Thérond, Gérard Raymond

(56) Documents cités:
- EP-A- 0 573 832
- DE-A- 2 128 078
- DE-A- 2 827 860
- FR-A- 2 408 241
- US-A- 5 003 244
- SCHMIDT H ET AL: "THE CHARGE EQUALIZER A NEW SYSTEM TO EXTEND BATTERY LIFETIME IN PHOTOVOLTAIC SYSTEMS, U.P.S. AND ELECTRIC VEHICLES" 27 Septembre 1993 , INTERNATIONAL TELECOMMUNICATIONS ENERGY CONFERENCE. (INTELEC), PARIS, SEPT. 27 - 30, 1993, VOL. 2, PAGE(S) 146 - 151 , SOCIETE DES ELECTRICIENS ET DES ELECTRONICIENS XP000496211 * abrégé * * page 148, colonne de droite, ligne 1 - ligne 14; figure 5 *

## Description

La présente invention est relative à un chargeur pour accumulateurs d'énergie électrique rechargeables du type utilisé par exemple dans les véhicules automobiles électriques.

On sait que l'un des facteurs les plus importants qui conditionnent à l'heure actuelle l'essor des véhicules à traction électrique, en particulier à l'usage des particuliers, réside dans l'aptitude de leur source d'énergie à fournir une puissance aussi grande que possible pour une distance parcourue aussi grande que possible. En effet, ces paramètres conditionnent principalement l'autonomie du véhicule et par conséquent son rayon d'action. Or, comme la source d'énergie est constituée, soit par un accumulateur seul chargé périodiquement par un chargeur fixe, soit dans le cas d'un véhicule hybride, par un accumulateur couplé à une source d'énergie thermique embarquée à travers un chargeur, on conçoit qu'une bonne gestion des cycles de charge/décharge de l'accumulateur est un soucis constant des concepteurs de ce genre de véhicules à traction électrique.

Une solution pour améliorer le cycle de charge d'un tel accumulateur est décrite dans la demande de brevet européen n° 0 573 832 au nom de la demanderesse de la présente demande de brevet. Le chargeur décrit dans ce document permet avant tout de compenser, pendant la charge de l'accumulateur, la disparité des capacités maximales de charge des éléments qui le composent.

A cet effet, les éléments de l'accumulateur sont répartis en des groupes distincts comportant chacun au moins un élément, chacun de ces groupes étant connecté à son propre circuit de charge, les circuits de charge étant alimentés à partir d'une source d'énergie électrique commune. Le régime de charge est divisé en deux phases pendant la première desquelles les circuits de charge reçoivent un courant d'intensité constante, tandis que pendant la deuxième phase une tension sensiblement constante leur est appliquée. Le passage de la première à la seconde phase se fait à partir du moment où la tension aux bornes de chacun des groupes d'éléments devient supérieure à une tension de référence prédéterminée.

Ainsi, tous les éléments peuvent être chargés au maximum de leur capacité sans que l'on coure le risque que le ou les éléments dont les capacités maximales de charge sont les plus faibles, ne soient endommagés.

L'invention a pour but de fournir un chargeur pour accumulateur rechargeable qui est un perfectionnement de celui décrit brièvement ci-dessus et qui permet d'augmenter encore davantage le taux de charge d'un accumulateur moyennant un rendement global excellent.

L'invention a donc pour objet un chargeur d'accumulateur d'énergie électrique comportant plusieurs éléments ou groupes d'éléments raccordés en série, ce chargeur comprenant, pour chacun de ces éléments ou groupes d'éléments, un circuit de charge destiné à être alimenté par une source d'énergie électrique, ledit circuit de charge comprenant un transformateur dont le primaire reçoit son énergie électrique de ladite source et dont le secondaire est raccordé à l'élément ou groupe d'éléments concernés de l'accumulateur à travers un redresseur, ce chargeur étant caractérisé en ce que ladite source d'énergie électrique comporte des moyens d'alimentation pour fournir une tension redressée monopolaire d'allure sinusoïdale, en ce que ledit circuit de charge comprend un convertisseur à accumulation raccordé auxdits moyens d'alimentation et en ce que ledit chargeur comporte en outre des moyens pour mesurer la tension de chaque élément ou groupe d'éléments de l'accumulateur et des moyens pour commander le blocage et le déblocage des oscillations du convertisseur qui leur est associé en fonction de la valeur de la tension mesurée par lesdits moyens de mesure.

Grâce à ces caractéristiques, les éléments ou groupes d'éléments de l'accumulateur peuvent tous être chargés à leur charge maximale en dépit des disparités des valeurs de charge maximale qu'ils peuvent présenter par construction. En outre, pendant le régime de décharge, l'invention permet de répartir de façon équilibrée la charge de l'accumulateur parmi tous les éléments qui le composent.

D'autres caractéristiques et avantages de la présente invention apparaîtront au cours de la description qui va suivre, donnée uniquement à titre d'exemple et faite en se référant aux dessins annexés sur lesquels:

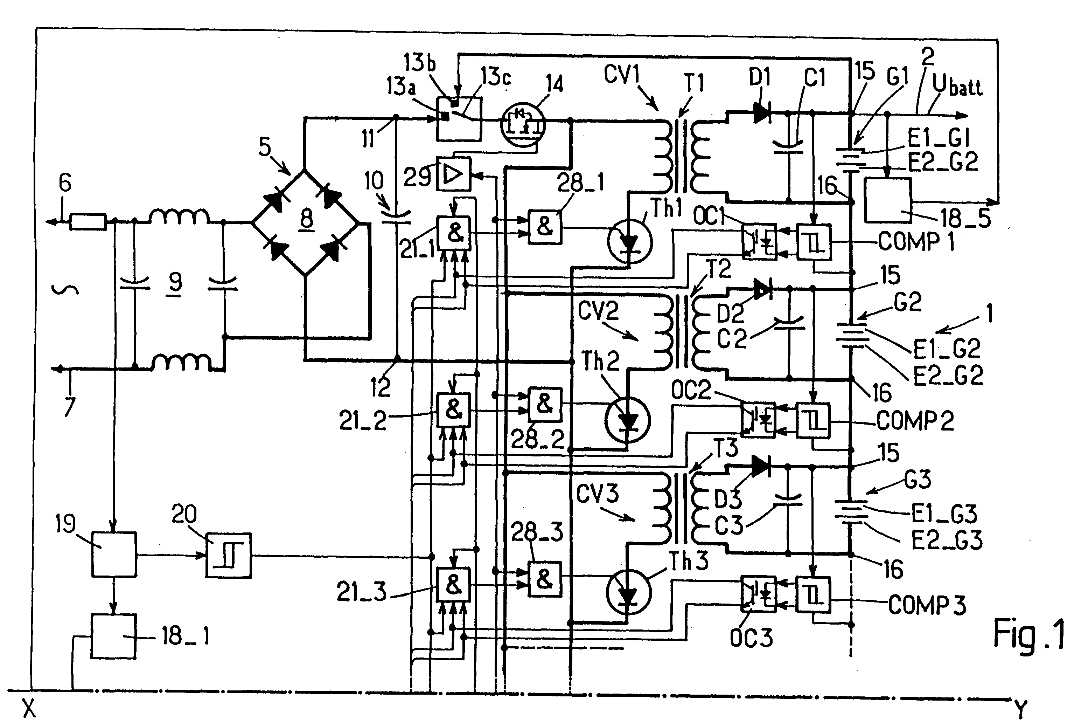

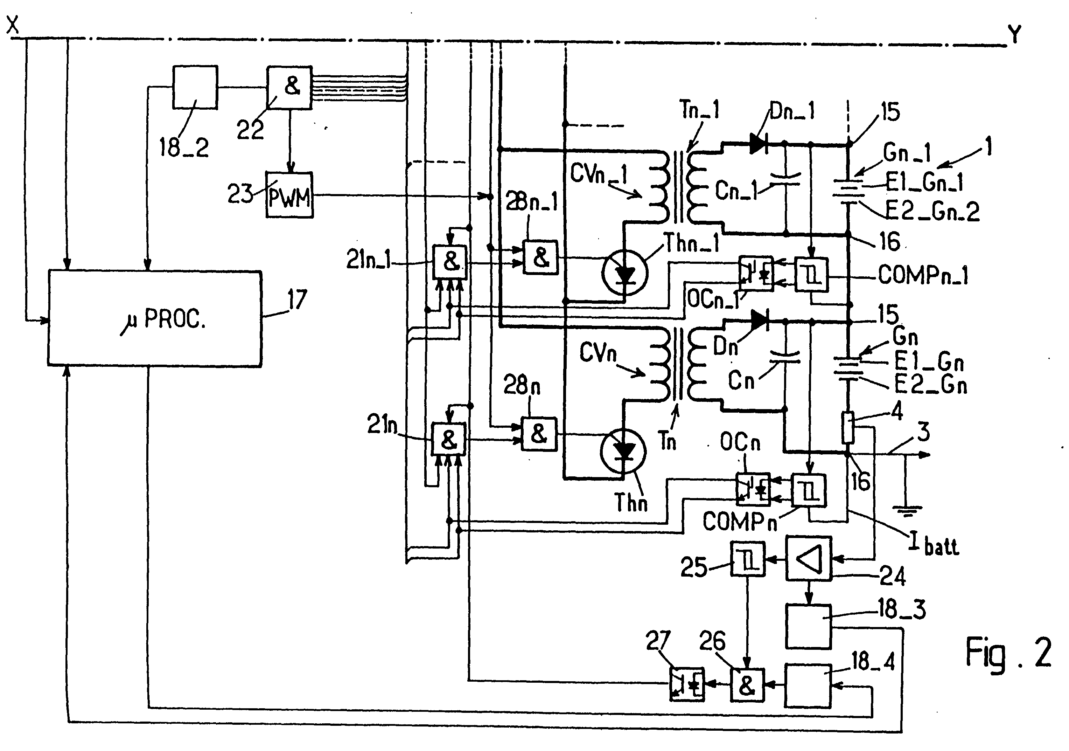

les figures 1 et 2 représentent, en étant juxtaposées, un schéma général d'un chargeur pour accumulateur rechargeable selon l'invention.

Sur ces figures, l'accumulateur 1 est représenté comme étant formé par un certain nombre de groupes G1, G2,.....Gn d'un ou de plusieurs éléments d'accumulateur, par exemple E1-G1, E2-G1, E1-G2, E2-G2 ......E1-Gn, E2-Gn. Le nombre de deux éléments par groupe est ici arbitrairement choisi à titre d'exemple. En effet, le nombre de groupes ainsi que le nombre de d'éléments par groupe peuvent être choisis librement en fonction de critères généraux d'utilisation des accumulateurs, critères qui n'ont pas besoin d'être davantage expliqués ici pour permettre la compréhension de l'invention.

Les éléments E1-G1, E2-G1, E1-G2, E2-G2 ......E1-Gn, E2-Gn sont tous raccordés en série entre une borne positive 2 à laquelle règne un potentiel U_{batt}, et une borne négative 3 qui est au potentiel de la masse. Toutefois, entre l'élément E2-Gn et la masse est raccordée une résistance série 4 de mesure de courant dont le rôle sera décrit plus loin.

Le chargeur comporte un redresseur 5 destiné à être raccordé par ses bornes 6 et 7 à une source d'énergie électrique alternative (non représentée). Dans le cas où selon l'une des nombreuses applications pratiques de l'invention, le chargeur équipe un véhicule automobile à traction électrique, la source alternative peut être le réseau de distribution publique, moyennant quoi le véhicule sera immobilisé pour effectuer la charge de son accumulateur. Si, au contraire, il s'agit d'un véhicule de type hybride dans lequel une génératrice animée par un moteur à combustion interne équipe le véhicule, la source alternative peut être cette génératrice.

Le redresseur 5 comporte un pont de diodes 8 raccordé, côté courant alternatif, à un filtre 9 qui est connecté aux bornes 6 et 7. Côté courant continu, le pont 8 est connecté en parallèle à un condensateur de lissage 10 aux bornes 11 et 12 duquel apparaît une tension continue de sortie d'allure sinusoïdale.

La borne de sortie 11 du redresseur 5 est connectée à l'un des pôles fixes 13a d'un inverseur 13 permettant de changer le régime de fonctionnement du chargeur. Le rôle de cet inverseur sera expliqué plus loin. Le contact mobile 13c de l'inverseur 13 est connecté à l'une des extrémités du trajet de conduction principal d'un composant semi-conducteur de puissance 14, par exemple un composant de type IGBT. Dans le mode de réalisation préféré de l'invention, l'autre extrémité de ce trajet est connectée en commun aux primaires de n transformateurs T1 à Tn, c'est à dire autant de transformateurs qu'il y a de groupes d'éléments dans l'accumulateur 1. En variante, des éléments semi-conducteurs de cette nature peuvent respectivement être connectés en série avec chacun des primaires.

Selon l'exemple de réalisation représenté, les primaires des transformateurs T1 à Tn sont également reliés aux anodes respectives de thyristors Th1 à Thn, dont toutes les cathodes sont raccordées en commun et à la borne 12 du redresseur 5.

Les secondaires des transformateurs T1 à Tn sont raccordés respectivement en parallèle à des montages en série composés de diodes de redressement D1 à Dn et de condensateurs C1 à Cn. Dans chacun de ces montages, la jonction entre la diode et le condensateur est reliée au pôle positif 15 du groupe d'éléments d'accumulateur concerné, tandis que le point de connexion du condensateur et du secondaire du transformateur est relié au pôle négatif 16 de ce groupe. Par exemple, pour ce qui concerne le groupe G2, la jonction entre la diode D2 et le condensateur C2 est reliée à la borne 15 qui constitue le pôle positif des éléments E1-G2 et E2-G2, tandis que le point de connexion entre le secondaire du transformateur T2 et le condensateur C2 est relié à la borne 16 qui est le pôle négatif des éléments E1-G2 et E2-G2. On notera que la borne 15 connectée à la jonction entre la diode D1 et le condensateur C1 est en même temps la borne de sortie positive 2 du chargeur. Par ailleurs, la borne 16 constituant le pôle négatif du groupe d'éléments Gn est raccordé au point de connexion entre le secondaire du transformateur Tn et le condensateur Cn par l'intermédiaire de la résistance série 4.

Les montages comprenant respectivement l'un des transformateurs T1 à Tn, l'un des thyristors Th1 à Thn, l'une des diodes D1 à Dn et l'un des condensateurs C1 à Cn, forment ensemble avec le composant semi-conducteur de puissance 14 (qui est commun à tous ces montages), autant de convertisseurs appelés "convertisseurs à accumulation" par les spécialistes. Sur les figures 1 et 2, on a affecté à ces convertisseurs des références générales respectives CV1 à CVn et on les appellera simplement "convertisseur" dans la suite de la description.

Comme on peut le constater, ces convertisseurs sont de conception simple et assurent un couplage magnétique efficace, tout en étant commandés par un composant de commutation commun 14. Chaque convertisseur peut être mis hors circuit par son propre thyristor, Th1 à Thn. Comme côté alimentation, les convertisseurs sont raccordés en parallèle, il se produit seulement une variation de l'amplitude du courant passant dans le composant semi-conducteur de puissance 14, lorsque les thyristors Th1 à Thn coupent leur convertisseur respectif, l'amplitude du courant dans les autres convertisseurs restant donc inchangée dans ce cas. Ainsi, les convertisseurs n'ont pas d'influence les uns sur les autres et la commande (intervalle de conduction) du composant semi-conducteur est indépendante du nombre de convertisseurs du chargeur.

Par ailleurs, on remarquera que tous les convertisseurs sont découplés les uns des autres, tant galvaniquement que magnétiquement, de sorte qu'ils peuvent être connectés directement au groupe d'éléments d'accumulateur qu'ils sont chargés d'alimenter.

Dans chaque convertisseur CV1 à CVn, la diode D1 à Dn peut être de tout type de diode au silicium approprié. Toutefois, on préfère utiliser des diodes de type Schottky qui sont dotées de tensions de blocage relativement élevées.

On remarquera également que les condensateurs C1 à Cn ont pour rôle d'atténuer les pointes de courant s'écoulant dans les éléments d'accumulateur. Ils peuvent avoir une faible valeur. Dans certains cas, en fonction de la valeur capacitive de ces éléments, on peut même les omettre complètement.

Chaque convertisseur CV1 à CVn comporte un circuit comparateur COMP1 à COMPn chargé de surveiller la tension du groupe d'éléments d'accumulateur alimenté par ce convertisseur. Chaque circuit comparateur reçoit son énergie d'alimentation du groupe d'éléments auquel il est associé. Dans le mode de réalisation représenté ici dans lequel on envisage de gérer précisément tant la charge que la décharge de l'accumulateur, chaque circuit comparateur COMP1 à COMPn comprend deux comparateurs qui comparent la tension du groupe d'éléments G1 à Gn respectifs à deux tensions de référence à savoir: une première tension de référence supérieure Us1 qui correspond à la tension à pleine charge, et une seconde tension de référence inférieure Us2 correspondant à une valeur à partir de laquelle, au cours de la décharge, la charge d'un groupe d'éléments donné doit être compensée à l'aide de la charge d'autres groupes d'éléments. Les processus mettant en oeuvre ces tensions de référence seront décrits par la suite.

Les deux tensions de référence sont affectées d'hystérésis qui peuvent être choisies d'égales valeurs, mais qui doivent compenser au moins la résistance interne du groupe d'éléments concernés.

Il est à noter que chaque circuit comparateur peut également surveiller d'autres paramètres de fonctionnement de l'accumulateur, par exemple en comparant sa température à une température de référence ou en comparant un certain intervalle de charge ou de décharge à un intervalle de temps de référence. Une telle variante peut être importante pour des accumulateurs de type autre que celui au plomb. Il est également possible de rendre les tensions de référence Us1 et Us2 auxquelles réagit le circuit comparateur, dépendantes de la température en utilisant à cet effet des résistances appropriées dont la résistivité est fonction de la température.

La sortie de chaque circuit comparateur COMP1 à COMPn est respectivement reliée à un opto-coupleur 0C1 à OCn qui assure son découplage galvanique avec la partie du chargeur se trouvant côté alimentation.

La gestion du fonctionnement du chargeur est assurée par un circuit logique comprenant, tout a moins dans le mode de réalisation représenté, un microprocesseur 17 convenablement programmé et plusieurs circuits discrets à fonction logique ET. Cependant, les spécialistes comprendront que les fonctions assurées par ces derniers peuvent également être mises en oeuvre par le microprocesseur 17 en les incorporant dans le programme de celui-ci, cette façon de construire le chargeur étant d'ailleurs préféré à une réalisation partielle à l'aide de circuits discret.

Sur les figures 1 et 2, le microprocesseur 17 est relié à des interfaces 18-1 à 18-5 par l'intermédiaire desquelles il communique avec les autres composants du chargeur.

L'interface 18-1 est connectée à un circuit 19 de mesure de la tension d'alimentation présente sur les bornes 6 et 7. Ce circuit de mesure 19 est également relié à un circuit à seuil 20 dont la sortie est connectée en commun à une première entrée de plusieurs portes ET, 21-1 à 21n, associées respectivement aux convertisseurs CV1 à CVn. Le circuit à seuil 20 autorise le fonctionnement du chargeur pour une tension d'alimentation se situant dans une fourchette déterminée.

L'interface 18-2 est reliée à la sortie d'une porte ET 22 à plusieurs entrées qui sont respectivement reliées aux opto-coupleurs OC1 à OCn des convertisseurs CV1 à CVn. La porte ET 22 comporte une autre sortie qui est connectée à un circuit 23 de réglage de la largeur des impulsions de commande, d'une part du composant semi-conducteur de puissance 14 et, d'autre part de chacun des thyristors Th1 à Thn.

L'interface 18-3 est connectée à la sortie d'un amplificateur 24 dont l'entrée est reliée à la résistance série 4. Cet amplificateur fournit ainsi une information du courant I_{batt} circulant dans l'accumulateur. Le même signal est appliqué à un détecteur de seuil 25.

L'interface 18-4 est connectée au microprocesseur 17 pour en recevoir une information de commande élaborée à partir des signaux qui lui sont appliqués par les autres interfaces et également à partir d'autres critères de commande qui ne sont pas décrits ici. L'interface 18-4 fournit un signal à la première entrée d'une porte ET 26 qui reçoit sur son autre entrée le signal fourni par le détecteur de seuil 25. La sortie de la porte ET 26 est raccordée à un opto-coupleur 27 dont la sortie est reliée en parallèle à une entrée des portes ET 21-1 à 21n.

L'interface 18-5 est reliée entre le microprocesseur 17 et la borne 2 du chargeur pour lui transmettre le signal U_{batt}.

Les portes ET 21-1 à 21-n sont reliées par l'une de leurs entrées à la sortie du circuit à seuil 20. D'autres entrées de ces portes ET sont connectées respectivement aux opto-coupleurs OC1 à OCn. Leurs sorties sont respectivement connectées à une entrée de portes ET 28-1 à 28n dont les autres entrées sont respectivement reliées aux sorties des portes ET 21-1 à 21n. Les autres entrées des portes ET 28-1 à 28-n sont connectées ensemble à la sortie du circuit de réglage 23. Les sorties des portes ET 28-1 à 28-n sont connectées respectivement aux électrodes de commande des thyristors Th1 à Thn.

L'électrode de commande du composant semi-conducteur de puissance 14 est reliée à la sortie d'un amplificateur 29 dont l'entrée est également connectée à la sortie du circuit de réglage 23.

Enfin, la borne 2 du chargeur est reliée au contact fixe 13b de l'inverseur 13.

Le fonctionnement de ce chargeur est le suivant.

### A. Régime de charge de l'accumulateur

Dans ce régime, l'inverseur 13 se trouve dans la position "Charge", c'est à dire que son contact mobile 13c est placé sur le contact fixe 13a.

En début de charge, le composant semi-conducteur de puissance 14 ainsi que les thyristors Th1 à Thn sont conducteurs pendant la durée des impulsions de commande fournies par le circuit de commande 23 au cours de chaque demi-alternance de la tension d'alimentation redressée fournie par le pont redresseur 8. Dans ces conditions, cette tension est appliquée directement aux primaires des transformateurs T1 à Tn des convertisseurs CV1 à CVn.

Les courants qui en résultent dans ces primaires croissent linéairement en magnétisant leur inductance. Comme la durée de conduction du composant 14 est maintenue constante au cours de chaque demi-alternance, l'amplitude de ces courants jusqu'à l'instant où le composant est rendu non conducteur est directement proportionnel à la tension d'alimentation et la forme des courants et donc également sinusoïdale. Le filtre 9 assure que les harmoniques de la tension ne peuvent pas être envoyés en retour dans la source d'énergie connectée aux bornes 6 et 7. En outre, le courant et la tension absorbés sont pratiquement en phase de sorte que cette source d'énergie n'est pratiquement pas chargée par des composantes réactives.

Pendant le temps de conduction du composant 14, la tension sur le primaire des transformateurs T1 à Tn est transférée sur les secondaires de ceux-ci. Cependant en raison des sens d'enroulement opposés des primaires et secondaires respectifs et également à cause de la présence des diodes D1 à Dn respectives, aucun courant ne peut s'écouler dans les secondaires et partant dans l'accumulateur. Lorsque à la fin de l'impulsion de commande fournie par le circuit de commande 23, le composant semi-conducteur de puissance se bloque, le courant dans les primaires est brusquement interrompu, ce qui induit une tension inverse dans les secondaires. Cette tension augmente jusqu'à ce que les diodes respectives D1 à Dn commencent à conduire. Dès cet instant, l'énergie accumulée dans les circuits magnétiques des transformateurs T1 à Tn est dissipée dans les groupes d'éléments G1 à Gn de l'accumulateur, le courant dans les secondaires diminuant pratiquement linéairement à zéro. Après un court temps de repos, ce processus peut se répéter pendant la demi-alternance suivante de la tension d'alimentation.

Le processus se termine pour chaque groupe d'éléments G1 à Gn lorsque sa tension (bornes 15 et 16) atteint la première tension de référence Us1. A ce moment, le circuit comparateur, COMP1 à COMPn, de ce groupe fournit un signal de sortie qui est appliqué par l'intermédiaire de l'opto-coupleur correspondant, CO1 à COn, à la porte ET 21-1 à 21n correspondante. Celle-ci le transmet à la porte ET 28-1 à 28-n qui lui est connectée. Le signal de sortie de cette dernière porte rend alors non conducteur le thyristor Th1 à Thn du convertisseur, CV1 à CVn, concerné et ainsi la charge de ce groupe d'éléments s'arrête provisoirement.

Lorsque tous les groupes d'éléments ont atteint une tension égale à la première tension de référence Us1 et que par conséquent tous les convertisseurs sont coupés, le microprocesseur 17 ajuste le circuit de réglage 23 de telle façon que le courant de charge soit désormais fixé à une intensité plus faible. Ceci peut se faire par une réduction de la durée des impulsions de commande fournies par ce circuit de commande 23.

Le régime de charge étant provisoirement interrompu, les tensions des groupes d'éléments de l'accumulateur s'abaissent quelques peu en raison d'un phénomène connu d'hystérisis. Dès que la tension aux bornes d'un groupe d'éléments redescend en dessous de la valeur fixée par le circuit comparateur respectif COMP1 à COMPn, le convertisseur correspondant CV1 à CVn est débloqué, car son thyristor, Th1 à Thn, alors rendu conducteur de nouveau. Le groupe d'éléments alimenté par le convertisseur en question peut donc compléter sa charge à l'aide d'un courant de charge d'une intensité plus faible. Il en résulte une plus faible chute de tension aux bornes de la résistance interne de ce groupe d'éléments et lorsque la tension finale de charge est de nouveau atteinte (tension Us1), la charge de ce groupe d'éléments a augmenté.

Quant tous les groupes sont de nouveau arrivés à une tension correspondant à la tension Us1, le processus peut se répéter à plusieurs reprises avec un courant de charge d'une intensité de plus en plus faible. Chaque itération a pour conséquence que la charge de l'accumulateur dans son ensemble augmente jusqu'à sa capacité maximale, les éléments dont les capacités maximales sont les plus grandes ayant alors également reçus leur niveau de charge complète.

On voit donc que ce processus selon l'invention permet de compenser les disparités de capacité qu'ont les éléments d'un accumulateur à cause des tolérances de fabrication inévitables. La durée de charge totale correspond à la durée de charge du groupe d'éléments présentant la plus grande capacité de charge.

### B. Régime de décharge de l'accumulateur

Selon une caractéristique particulièrement avantageuse de l'invention, le chargeur permet de procéder à une compensation du niveau de charge des éléments de l'accumulateur entre eux, en utilisant à cet effet le même processus que celui que l'on vient de décrire en ce qui concerne le régime de charge.

A cet effet, pendant la décharge, l'inverseur 13 est placé de manière que son contact mobile 13c soit appliqué sur son contact fixe 13b. Dans ces conditions, la tension de la borne 2 est appliquée au composant de puissance 14 de sorte que l'accumulateur lui-même peut alimenter les convertisseurs CV1 à CVn.

La compensation de niveau de charge a essentiellement pour but de soulager les éléments d'accumulateur ayant, par construction, une plus faible capacité maximale et d'en augmenter ainsi la capacité apparente. L'invention prévoit à cet effet de reporter en quelque sorte la capacité des éléments ayant une capacité maximale la plus grande sur ceux ayant une capacité maximale plus faible.

Ainsi, pendant le régime de décharge, chaque circuit comparateur, COMP1 à COMPn surveille la tension de son groupe d'éléments associé en la comparant à la tension de référence Us2 qui est fixée à une valeur à partir de laquelle on considère que la charge d'un groupe d'éléments doit être compensée par la charge des autres groupes d'éléments.

Si au cours de la décharge, la tension d'un groupe donné descend en dessous de la tension Us2, le convertisseur, CV1 à CVn, qui y est associé est débloqué par le fait que son thyristor, Th1 à Thn, est rendu conducteur. Un convertisseur ainsi débloqué fonctionnera de la même façon que pendant le processus de charge à ceci près que ce sont les groupes d'éléments de l'accumulateur ayant la plus grande capacité à l'instant considéré qui vont compenser le manque de charge du ou des groupes d'éléments pour lesquels le convertisseur est mis en marche.

On remarquera que l'énergie de magnétisation du circuit magnétique du transformateur d'un tel convertisseur actif est prélevée sur tous les éléments de l'accumulateur. Cependant, tant que le nombre d'éléments de capacité plus faible est inférieur au nombre d'éléments de capacité plus forte, de l'énergie est fournie aux éléments connectés au(x) convertisseur(s) débloqué(s) pendant la phase de démagnétisation du ou des circuit(s) magnétique(s) correspondant(s).

Dès qu'un équilibre de tous les niveaux de charge est de nouveau atteint, tous les convertisseurs sont bloqués et tous les groupes d'éléments fournissent alors de l'énergie au consommateur de courant qui est connecté à l'accumulateur.

Ce processus de compensation de charge peut être répété plusieurs fois au cours de la décharge et présente des avantages notables. Tout d'abord, la capacité maximale apparente de l'accumulateur dans son ensemble est plus élevée puisque les éléments ayant une capacité maximale comparativement plus faible sont déchargés plus lentement et parviennent à la capacité minimale admissible pour la bonne santé de l'accumulateur, en même temps que ceux qui ont une capacité maximale comparativement plus forte. L'accumulateur est donc déchargé plus régulièrement et de façon équilibrée pour tous ses éléments.

Par ailleurs, comme on sait qu'en général un accumulateur ne doit pas être déchargé à fond mais conserver un certain niveau de charge résiduelle (de 20 à 40% de la charge maximale possible), il est important de surveiller très précisément ce niveau minimal admissible. Cette exigence est cruciale par exemple pour une utilisation très intensive avec des cycles de charge/décharge très fréquents, comme dans le cas des véhicules automobiles électriques. Or, grâce à l'invention et notamment au fait que la décharge est en équilibre constant parmi tous les éléments de l'accumulateur, cette surveillance peut simplement se faire en contrôlant la tension U_{batt} aux bornes de l'accumulateur, tension qui devient ainsi un paramètre rendant compte du niveau de charge de tous les éléments.

Il est à noter également que la tension de référence inférieure Us2 fixée dans les circuits comparateurs COMP1 à COMPn peut servir à régler facilement le niveau de charge minimale que l'on veut imposer à l'accumulateur.

L'invention permet également de surveiller l'état des éléments de l'accumulateur. Pour ce faire, on programme le microprocesseur 17 pour qu'il compte durant les régimes de décharge le nombre de fois que chaque groupe d'éléments est couplé à son convertisseur associé. Plus ce nombre est élevé par rapport à ceux relevés pour les autres groupes d'éléments et plus la qualité du groupe d'éléments considéré sera détériorée.

Un chargeur construit selon l'invention peut, à titre d'exemple uniquement, comporter les composants suivants :

| | |
|---|---|
| Redresseur 8 | General Instruments GBU8G |
| Transformateurs T1 à Tn | Siemens, noyau ETD-49, N27, Induction maximale 240mT |
| Composant semi-conducteur de puissance 14 | Mitsubishi ICBT, 1200V, 8A |
| Thyristors Th1 à Thn | Texas Instruments 800V, 4A |
| Diodes D1 à Dn | Diodes Schottky 30V, 10A, tension inverse de crête 35V |
| Opto-coupleurs OC1 à Ocn et 27 | Siemens ILCT6, Dual |
| Circuits comparateurs COPM1 à COMPn | LM339N, QUAD |
| Microprocesseur 14 | Microchips RISC, 1651 et 1671 |

## Revendications

1. Chargeur d'accumulateur d'énergie électrique comportant plusieurs éléments ou groupes d'éléments raccordés en série (G1 à Gn; E1-G1, E2-G1, E1-G2, E2-G2, .......E1-Gn-1, E2-Gn-1, E1-Gn, E2-Gn), ce chargeur comprenant, pour chacun de ces éléments ou groupes d'éléments, un circuit de charge destiné à être alimenté par une source d'énergie électrique (5, 6, 7), ledit circuit de charge comprenant un transformateur (T1 à Tn) dont le primaire reçoit son énergie électrique de ladite source et dont le secondaire est raccordé à l'élément ou groupe d'éléments concernés (G1 à Gn; E1-G1, E2-G1, E1-G2, E2-G2, .......E1-Gn-1, E2-Gn-1, E1-Gn, E2-Gn) de l'accumulateur à travers un redresseur (D1,C1, D2,C2 .......Dn-1, Cn-1, Dn, Cn), ce chargeur étant **caractérisé en ce que** ladite source d'énergie électrique (5,6,7) comporte des moyens d'alimentation (8, 9, 10) pour fournir une tension redressée monopolaire d'allure sinusoïdale, **en ce que** ledit circuit de charge comprend un convertisseur à accumulation (CV1 à CVn) raccordé auxdits moyens d'alimentation (8,9,10) et **en ce que** ledit chargeur comporte en outre des moyens (COMP1 à COMPn) pour mesurer la tension de chaque élément ou groupe d'éléments de l'accumulateur et des moyens (14, 17, 21-1 à 21n, 23, 28-1 à 28n, Th1 à Thn) pour commander le blocage et le déblocage des oscillations du convertisseur qui leur est associé en fonction de la valeur de la tension mesurée par lesdits moyens de mesure (COMP1 à COMPn).

2. Chargeur suivant la revendication 1, **caractérisé en ce que** chaque convertisseur (CV1 à Cvn) comprend ledit transformateur (T1 à Tn) et ledit redresseur (D1 à Dn, C1 à Cn) et au moins un premier élément semi-conducteur commandable (14, Th1 à Thn) raccordé en série avec le primaire dudit transformateur (T1 à Tn) sur lesdits moyens d'alimentation (8, 9, 10).

3. Chargeur suivant la revendication 2, **caractérisé en ce que** ledit primaire de chaque transformateur (T1 à Tn) est connecté en série entre ledit premier élément semi-conducteur commandable (14) et un second élément semi-conducteur commandable (Th1 à Thn), sur lesdits moyens d'alimentation (8, 9, 10).

4. Chargeur suivant la revendication 3, **caractérisé en ce que** l'un (14) desdits éléments semi-conducteurs commandables est commun à tous les convertisseurs (CV1 à Cvn).

5. Chargeur suivant l'une quelconque des revendications 1 à 4, **caractérisé en ce que en ce qu'**il comporte également des moyens de commutation (13) pour permettre le branchement desdits convertisseurs (CV1 à Cvn), soit à auxdits moyens d'alimentation (8, 9, 10) pendant le régime de charge dudit accumulateur, soit sur l'une des bornes de celui-ci pendant son régime de décharge.

## Patentansprüche

1. Ladevorrichtung für elektrischen Akkumulator, der mehrere in Reihe geschaltete Elemente oder Gruppen von Elementen (G1 bis Gn, E1-G1, E2-G1, E1-G2, E2-G2, ..., E1-Gn-1, E2-Gn-1, E1-Gn, E2-Gn) umfaßt, wobei diese Ladevorrichtung für jedes dieser Elemente oder jede dieser Gruppen von Elementen eine Ladeschaltung umfaßt, die dazu bestimmt ist, von einer Quelle (5, 6, 7) für elektrische Energie gespeist zu werden, wobei die Ladeschaltung einen Transformator (T1 bis Tn) enthält, dessen Primärwicklung seine elektrische Energie von der Quelle empfängt und dessen Sekundärwicklung mit dem betreffenden Element oder mit der Gruppe der betreffenden Elemente (G1 bis Gn, E1-G1, E2-G1, E1-G2, E2-G2, ..., E1-Gn-1, E2-Gn-1, E1-Gn, E2-Gn) des Akkumulators über einen Gleichrichter (D1, C1, D2, C2, ..., Dn-1, Cn-1, Dn, Cn) verbunden ist, wobei diese Ladevorrichtung **dadurch gekennzeichnet ist, daß** die Quelle (5, 6, 7) für elektrische Energie Versorgungsmittel (8, 9, 10) umfaßt, um eine monopolare, gleichgerichtete Spannung mit sinusförmigem Verlauf zu liefern, daß die Ladeschaltung einen akkumulierenden Umsetzer (CV1 bis CVn) umfaßt, der an die Versorgungsmittel (8, 9, 10) angeschlossen ist, und daß diese Ladevorrichtung außerdem Mittel (COMF1 bis COMPn), die die Spannung jedes Elements oder jeder Gruppe von Elementen des Akkumulators messen, sowie Mittel (14, 17, 21-1 bis 21n, 23, 28-1 bis 28n, Th1 bis Thn), die die Sperrung und die Entsperrung von Oszillationen des ihnen zugeordneten Umsetzers in Abhängigkeit von dem durch die Meßmittel (CONP1 bis CONPn) gemessenen Wert der Spannung steuern, umfaßt.

2. Ladevorrichtung nach Anspruch 1, **dadurch gekennzeichnet, daß** jeder Umsetzer (CV1 bis CVn) den Transformator (T1 bis Tn) und den Gleichrichter (D1 bis Dn, C1 bis Cn) und wenigstens ein erstes steuerbares Halbleiterelement (14, Th1 bis Thn), das mit der Primärwicklung des Transformators (T1 bis Tn) in den Versorgungsmitteln (8, 9, 10) in Reihe geschaltet ist, umfaßt.

3. Ladevorrichtung nach Anspruch 2, **dadurch gekennzeichnet, daß** die Primärwicklung jedes Transformators (T1 bis Tn) zwischen dem ersten steuerbaren Halbleiterelement (14) und einem zweiten steuerbaren Halbleiterelement (Th1 bis Thn) in den Versorgungsmitteln (8, 9, 10) in Reihe geschaltet ist.

4. Ladevorrichtung nach Anspruch 3, **dadurch gekennzeichnet, daß** eines (14) der steuerbaren Halbleiterelemente allen Umsetzern (CV1 bis CVn) gemeinsam ist.

5. Ladevorrichtung nach einem der Ansprüche 1 bis 4, **dadurch gekennzeichnet, daß** sie außerdem Umschaltmittel (13) umfaßt, um den Anschluß der Umsetzer (CV1 bis CVn) entweder an die Versorgungsmittel (8, 9, 10) während des Ladebetriebs des Akkumulators oder an einen seiner Anschlüsse während seines Entladebetriebs zu ermöglichen.

## Claims

1. Electrical energy accumulator charger comprising several cells or groups of cells connected in series (G1 to Gn; E1-G1, E2-G1, E1-G2, E2-G2, ..... E1-Gn-1, E2-Gn-1, E1-Gn, E2-Gn), this charger comprising, for each of these cells or groups of cells, a charging circuit intended to be supplied by an electric power source (5, 6, 7), said charging circuit comprising a transformer (T1 to Tn) whose primary winding receives its electric power from said supply and whose secondary winding is connected to the accumulator cell or group of cells concerned (G1 to Gn; E1-G1, E2-G1, E1-G2, E2-G2, ..... E1-Gn-1, E2-Gn-1, E1-Gn, E2-Gn), via a rectifier (D1, C1, D2, C2 .... Dn-1, Cn-1, Dn, Cn), this charger being **characterized in that** said electric power source (5, 6, 7) comprises supply means (8, 9, 10) for providing a monopolar rectified voltage having a sinusoidal aspect or form, **in that** said charging circuit comprises a flyback converter (CV1 to CVn) connected to said supply means (8, 9, 10) and **in that** said charger further comprises means (COMP1 to COMPn) for measuring the voltage of each accumulator cell or group of cells and means (14, 17, 21-1 to 21n, 23, 28-1 to 28n, Th1 to Thn) for controlling the blocking and unblocking of the converter oscillations which is associated therewith as a function of the value of the voltage measured by said measuring means (COMP1 to COMPn).

2. Charger according claim 1, **characterized in that** each converter (CV1 to CVn) comprises said transformer (T1 to Tn) and said rectifier (D1 to Dn, C1 to Cn) and at least a first controllable semiconductor element (14, Th1 to Thn) connected in series with the primary winding of said transformer (T1 to Tn) to said supply means (8; 9, 10).

3. Charger according to claim 2, **characterized in that** said primary winding of each transformer (T1 to Tn) is connected in series between said first controllable semiconductor element (14) and a second controllable semiconductor element (Th1 to Thn), to said supply means (8, 9, 10).

4. Charger according to claim 3, **characterized in that** one (14) of said controllable semiconductor elements is common to all the converters (CV1 to CVn).

5. Charger according to any of claims 1 to 4, **characterized in that** it also comprises switching means (13) for enabling said converters (CV1 to CVn) to be connected, either to said supply means (8, 9, 10) during the charging mode of said accumulator, or to one of the terminals of the latter during its discharging mode.
